# EUROPÄISCHE PATENTSCHRIFT

(11) **EP 2 753 661 B1**
(45) Veröffentlichungstag und Bekanntmachung des Hinweises auf die Patenterteilung: **30.05.2018**
(21) Anmeldenummer: 12742900.9
(22) Anmeldetag: 01.08.2012
(51) Int. Cl.: C08K 3/36, C08L 7/00

(54) **SCHWEFELVERNETZBARE GUMMIERUNGSMISCHUNG**
SULPHUR-CROSSLINKABLE RUBBERIZING MIXTURE
MÉLANGE D'ENGOMMAGE RÉTICULABLE AU SOUFRE

(30) Priorität: 09.09.2011 DE 102011053450
(43) Veröffentlichungstag der Anmeldung: 16.07.2014
(73) Patentinhaber: Continental Reifen Deutschland GmbH, 30165 Hannover (DE)
(72) Erfinder: KRAMER, Thomas, 32049 Herford (DE); RECKER, Carla, 30167 Hannover (DE); KREYE, Marc, 38104 Braunschweig (DE); TORBRÜGGE, Thorsten, 30855 Langenhagen (DE)
(74) Vertreter: Finger, Karsten
(86) Internationale Anmeldenummer: PCT/EP2012/065032
(87) Internationale Veröffentlichungsnummer: WO 2013/034368

(56) Entgegenhaltungen:
- WO-A1-2010/133492
- WO-A1-2011/083048
- US-B1- 6 465 544

## Beschreibung

Die Erfindung betrifft eine schwefelvernetzbare Gummierungsmischung für Festigkeitsträger in Fahrzeugluftreifen, enthaltend 70 bis 100 phr (Gewichtsteile, bezogen auf 100 Gewichtsteile der gesamten Kautschuke in der Mischung) Naturkautschuk, bis zu 30 phr zumindest eines Polybutadiens, bis zu 15 phr zumindest eines Rußes, 20 bis 100 phr zumindest einer hoch dispergierbaren Kieselsäure, zumindest ein Silankupplungsagens und ein Haftsystem. Ferner betrifft die Erfindung Fahrzeugluftreifen, die die mit Schwefel vernetzte Gummierungsmischung aufweisen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Fahrzeugluftreifen sind mit textilen oder metallischen Festigkeitsträgern, z. B. mit vermessingtem Stahlcord, verstärkt, um hohen mechanischen Beanspruchungen standzuhalten. Fahrzeugluftreifen weisen z. B. vermessingten Stahlcord im Gürtel, im Wulstkern und ggf. in der Karkasse auf. Um die Haltbarkeit des Gummi-Festigkeitsträger-Verbundes zu gewährleisten, soll die einbettende Kautschukmischung (Gummierungsmischung) eine gute Haftung zum Festigkeitsträger aufzeigen, wobei die Haftung durch Alterung und feuchte Lagerung nicht beeinträchtigt werden sollte. Die Vulkanisate sollten außerdem eine hohe dynamische und mechanische Beständigkeit und eine geringe Neigung zu Rissbildung und -wachstum aufweisen.

Die Haftung von Gummi zu textilen Festigkeitsträgern erfolgt über Imprägnierung (z. B. mit Resorcinformaldehydharzen in Kombination mit Kautschuklatices, RFL-Dip), im Direktverfahren mit Haftmischungen oder über Haftlösungen aus unvulkanisiertem Kautschuk mit Polyisocyanaten.

Die Gummi-Metall-Haftung kann durch Zusatz von so genannten Verstärkerharzen in der Gummierungsmischung positiv beeinflusst werden. Als Verstärkerharze sind z. B. Lignin, Phenol-Formaldehydharze mit Härter und Polymerharze bekannt. Zur Verbesserung der Gummi-Metall-Haftung ist es seit langem bekannt, Cobaltsalze und/oder ein Resorcin-Formaldehyd-Kieselsäuresystem oder ein Resorcin-Formaldehydsystem als Zusätze für die Gummierungsmischungen zu verwenden. Gummierungsmischungen mit Cobaltsalzen und einem Resorcin-Formaldehyd-Kieselsäuresystem sind z. B. aus KGK Kautschuk Gummi Kunststoffe Nr. 5/99, S. 322-328, aus GAK 8/1995, S. 536 und der EP-A-1 260 384 bekannt.

In bekannten Gummierungsmischungen werden als Füllstoffe Ruß und/oder Kieselsäure in folgenden Ruß-zu-Kieselsäure-Verhältnissen eingesetzt: 100 : 0 bis 80 : 20 sowie 20 : 80 bis 0 : 100.

Schwefelvernetzbare Gummierungsmischungen gemäß dem Oberbegriff des Anspruchs 1 sind aus der DE 696 02 212 T2 bekannt. Sie werden dort z. B. als Gummierungsmischungen für den Gürtel eingesetzt. Damit soll erreicht werden, dass der Rollwiderstand des Reifens reduziert wird, ohne dass die sonstigen Eigenschaften, wie Haftung, Verschleißfestigkeit, Dauerhaltbarkeit, insbesondere des Gürtels, oder die Herstellung des Reifens beeinträchtigt werden. Unter hoch dispergierbarer Kieselsäure wird dabei eine Kieselsäure verstanden, die zerfallen bzw. deagglomerieren kann und daher besonders gut und gleichmäßig in einer Elastomermatrix dispergiert (verteilt) werden kann. Diese besonders gute Verteilung kann durch elektronen- oder lichtmikroskopische Aufnahmen an Dünnschnitten nachgewiesen werden. Die von der Firma Evonik Industries vertriebenen Kieselsäuren Ultrasil® VN2 und Ultrasil® VN3 fallen nicht unter hoch dispergierbare Kieselsäuren. Die Verwendung von hoch dispergierbarer Kieselsäure soll die Materialermüdung der vulkanisierten Mischung auf ein Minimum reduzieren und damit das Risiko, dass sich die Mischung von Festigkeitsträgern löst, reduzieren. Die in der DE 696 02 212 T2 verwendeten hoch dispergierbaren Kieselsäuren weisen eine CTAB-Zahl ≤ 125 m²/g auf.

Der vorliegenden Erfindung liegt die Aufgabe zugrunde, Gummierungsmischungen für Festigkeitsträger in Fahrzeugluftreifen bereit zu stellen, die sich durch eine verbesserte Beständigkeit gegen Rissbildung und -wachstum bei guter Haftung und guten mechanischen und dynamischen Eigenschaften auszeichnen. Die Lebensdauer von Fahrzeugluftreifen soll dadurch verbessert werden.

Gelöst wird die Aufgabe erfindungsgemäß dadurch, dass die hoch dispergierbare Kieselsäure eine CTAB-Zahl gemäß ASTM D 3765 von mehr als 130 m²/g aufweist.

Es hat sich überraschenderweise herausgestellt, dass durch Verwendung von hoch dispergierbaren Kieselsäuren mit einer hohen CTAB-Zahl, d. h. einer großen spezifischen Oberfläche ohne die Poren, in die Cetyltrimethylammoniumbromid nicht hineingelangt, die Rissbildungs- und Risswachstumsgeschwindigkeit deutlich verbessert werden kann. Reifen mit einer erfindungsgemäßen Gummierungsmischung z. B. als Gürtelgummierungsmischung erfahren dadurch eine deutliche Erhöhung der Lebensdauer.

Die Gummierungsmischung enthält 70 bis 100 phr Naturkautschuk (NR), wobei es sich um auf biochemischem Wege in Pflanzen synthetisiertes Polyisopren mit einem cis-1,4-Gehalt von mehr als 99 % handelt.

Als weiteren Kautschuk enthält die Gummierungsmischung bis zu 30 phr, vorzugsweise 15 bis 25 phr, zumindest eines Polybutadiens (BR). Für besonders gute Haftungseigenschaften und eine gutes Verarbeitungsverhalten ist das Polybutadien eines mit einem cis-Gehalt von mehr als 95 Gew.-% oder ein funktionalisiertes Li-Polybutadien, z. B. BR1250 H von der Firma Nippon Zeon oder solche funktionalisierten Polybutadiene, wie sie in der EP 2 289 990 A1 beschrieben sind.

Die erfindungsgemäße Gummierungsmischung kann bis zu 15 phr zumindest eines Rußes enthalten. Sie kann demnach aber auch völlig frei von Ruß sein. Als Ruß-Typen kommen solche in Frage, die für Gummierungsmischungen üblich sind, beispielsweise Ruß des Typs N 326.

In der Gummierungsmischung sind 20 bis 100 phr, vorzugsweise 40 bis 80 phr, zumindest einer hoch dispergierbaren Kieselsäure mit einer CTAB-Zahl von mehr als 130 m²/g enthalten. Es können demgemäß aber auch mehrere dieser Kieselsäuren nebeneinander in der Mischung vorliegen. Unter hoch dispergierbaren Kieselsäuren werden in dieser Anmeldung solche Kieselsäuren zusammengefasst, die der Fachmann als gut und gleichmäßig in der Elastomermatrix dispergierbar kennt. Sie sind auf dem Markt als so genannte HD-Kieselsäuren z. B. als Ultrasil® 7000 von der Firma Evonik Industries oder Zeosil® 1165 MP von der Firma Rhodia erhältlich. Sie zeigen eine deutlich verbesserte Strukturstabilität bei Anlegung äußerer Kräfte und lassen sich daher gut in der Mischung verteilen.

Zur Verbesserung der Verarbeitbarkeit und zur Anbindung der Kieselsäure und anderer ggf. vorhandener polarer Füllstoffe an den Dienkautschuk werden Silan-Kupplungsagenzien in der Gummierungsmischung eingesetzt. Die Silan-Kupplungsagenzien reagieren mit den oberflächlichen Silanolgruppen der Kieselsäure während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Evonik Industries) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive Performance Materials, USA, oder solche, die unter dem Namen VP Si 363 von der Firma Evonik Industries vertrieben werden.

Die Gummierungsmischung kann neben Ruß und den hoch dispergierbaren Kieselsäuren auch noch weitere Füllstoffe enthalten, wie andere Kieselsäuren, Alumosilicate, Kreide, Stärke, Magnesiumoxid, Titandioxid oder Kautschukgele.

Die erfindungsgemäße Gummierungsmischung enthält ein Haftsystem. Je nachdem, ob die Gummierungsmischung für textile oder metallische Festigkeitsträger eingesetzt werden soll, kommt entweder ein Haftsystem für die Gummi-Textil-Haftung oder ein Haftsystem für die Gummi-Metall-Haftung zur Anwendung.

Gemäß einer bevorzugten Weiterbildung der Erfindung handelt es sich bei den Festigkeitsträgern um metallische Festigkeitsträger. Die Verbesserung der Haftung und des Rissverhaltens wirkt sich besonders vorteilhaft bei metallischen Festigkeitsträgern aus, da diese bei Haftungsverlust und Rissbildung verstärkt der Korrosion ausgesetzt sind, was die Lebensdauer der Fahrzeugluftreifens stark beeinträchtigt.

Wird die Gummierungsmischung zur Gummierung von metallischen Festigkeitsträgern, insbesondere Stahlcord, eingesetzt, wird vorzugsweise ein Stahlcordhaftsystem auf der Basis von organischen Cobaltsalzen und Verstärkerharzen und mehr als 2,5 phr Schwefel verwendet.

Die organischen Cobaltsalze werden üblicherweise in Mengen von 0,2 bis 2 phr eingesetzt. Als Cobaltsalze können z. B. Cobaltstearat, -borat, -borat-alkanoate, -naphthenat, - rhodinat, -octoat, -adipat usw. verwendet werden. Als Verstärkerharze können Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze, beispielsweise Alnovol®-Typen, eingesetzt werden. Von den Resorcin-Harzen können auch die Vorkondensate eingesetzt werden.

Gemäß eine vorteilhaften Weiterbildung der Erfindung enthält die Gummierungsmischung weniger als 15 phr Prozesshilfsmittel, wobei hierunter Öle und andere viskositätssenkende Substanzen verstanden werden. Es kann sich bei diesen Prozesshilfsmitteln beispielsweise um Weichmacheröle oder Weichmacherharze handeln. Es hat sich herausgestellt, dass die Menge an Prozesshilfsmitteln, die für besseres Mischen, Extrudieren und Kalandrieren der Mischung zugesetzt werden, im Vergleich zu herkömmlichen Mischungen stark reduziert werden kann und die erfindungsgemäßen Mischungen trotzdem ein gutes Verarbeitungsverhalten bei moderater Viskosität und die Vulkanisate gute dynamischmechanische Eigenschaften aufweisen.

Als weitere Zusatzstoffe kann die Kautschukmischung weitere übliche Zuschlagstoffe in üblichen Gewichtsteilen, wie Vulkanisationsbeschleuniger, Vulkanisationsverzögerer, Zinkoxid und Alterungsschutzmittel, enthalten.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung kann zur Gummierung unterschiedlichster Reifenbauteile, wie dem Wulstkern, den Wulstabdeckungen, dem Gürtel, der Karkasse oder den Gürtelbandagen, eingesetzt werden, wobei auch mehrere Bauteile innerhalb eines Reifens mit der erfindungsgemäßen Mischung versehen, d. h. in der Regel kalandriert, werden können.

Eine besonders hohe Verlängerung der Lebensdauer von Fahrzeugluftreifen kann man erzielen, wenn man die in der Regel metallischen Gürtellagen mit der erfindungsgemäßen Gummierungsmischung versieht. Ein Reifen, der einen Gürtel mit der erfindungsgemäßen Mischung als Gürtelgummierung aufweist und der nach herkömmlichen Verfahren aufgebaut und vulkanisiert wird, zeichnet sich durch eine sehr gute Gürtelhaltbarkeit aus.

Alternativ oder parallel dazu kann die Karkasse mit der Gummierungsmischung versehen werden. Vorzugsweise handelt sich dabei um die Stahlcord-Karkasse eines Nutzfahrzeugreifens.

Die Erfindung soll nun anhand eines Vergleichs- und eines Ausführungsbeispiels, die in der Tabelle 1 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischung ist mit V, die erfindungsgemäße Gummierungsmischung mit E gekennzeichnet. Die Mischung V(1) ist eine Gürtelgummierungsmischung mit einer herkömmlichen Kieselsäure des Typs Ultrasil® VN3 (Evonik Industries). Die Mischung V(2) enthält eine hoch dispergierbare Kieselsäure mit einer CTAB-Zahl von weniger als 130 m²/g (Zeosil® 1165 MP von der Firma Rhodia). Die Mischung E(3) enthält demgegenüber eine hoch dispergierbare Kieselsäure mit einer CTAB-Zahl von mehr als 130 m²/g (Zeosil® 1165 MP von der Firma Rhodia).

Die Mischungsherstellung erfolgte unter üblichen Bedingungen in mehreren Stufen in einem Labortangentialmischer. Aus sämtlichen Mischungen wurden Prüfkörper durch 20 minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei Raumtemperatur gemäß DIN 53 512,
- Zugfestigkeit bei Raumtemperatur gemäß DIN 53 504
- Reißdehnung bei Raumtemperatur gemäß DIN 53 504
- Spannungswert (Modul) bei 50 und 300 % Dehnung bei Raumtemperatur gemäß DIN 53 504
- Bruchenergiedichte bestimmt im Zugversuch gemäß DIN 53 504, wobei die Bruchenergiedichte die bis zum Bruch erforderliche Arbeit, bezogen auf das Volumen der Probe, ist
- Verlustfaktor tan δₘₐₓ bei 55 °C als Maximalwert über den Dehnungssweep aus dynamisch-mechanischer Messung gemäß DIN 53 513

Ferner wurden mit die Mischungen bezüglich ihrer dynamischen Haltbarkeit mit Hilfe eines "Tear Fatigue Analyzer" (TFA) charakterisiert. Typische Prüfprozeduren sind z. B. in Kautschuk Gummi Kunststoffe 45 (12), 1064 ff (1992) beschrieben. Die vorliegenden Ergebnisse wurden mit einer Pulsbelastung von 30/5 Hz und dynamischen Dehnungen von 5 bis 8 % erzielt. In der Auswertung wurde der mögliche Energieeintrag für eine Lebensdauer von 100 kZyklen ermittelt.

Außerdem wurden Nutzfahrzeugreifen einer Dimension 385/65 R22,5 mit einem vierlagigen Stahlgürtel mit den Mischungen V(1), V(2) und E(3) als Gummierungsmischungen für die 2 und 3 Gürtellage hergestellt und auf einem Innenprüfstand bei einer konstanten Umgebungstemperatur von 38 °C geprüft. Die typische Prüfprozedur beinhaltet eine stufenweise Erhöhung der Last bis zum Reifenausfall.

**Tabelle 1**

| **Bestandteile** | **Einheit** | **V(1)** | **V(2)** | **E(3)** |
|---|---|---|---|---|
| Naturkautschuk | phr | 80 | 80 | 80 |
| Polybutadien^{a} | phr | 20 | 20 | 20 |
| Kieselsäure A^{b} | phr | 55 | - | - |
| Kieselsäure B^{c} | phr | - | 55 | - |
| Kieselsäure C^{d} | phr | - | | 55 |
| Silankupplungsagens' | phr | 8,5 | 8,5 | 8,5 |
| Prozesshilfsmittel | phr | 5 | 5 | 5 |
| Alterungsschutzmittel | phr | 4 | 4 | |
| organisches Cobaltsalz | phr | 0,4 | 0,4 | 0,4 |
| Harz aus Resorcin und | | | | |
| Formaldehydspender | phr | 5 | 5 | 5 |
| Zinkoxid | phr | 8 | 8 | 8 |
| Beschleuniger | phr | 1,5 | 1,5 | 1,5 |
| Schwefel | phr | 4,0 | 4,0 | 4,0 |

| **Eigenschaften** | | | | |
|---|---|---|---|---|
| Shore A-Härte bei RT | Shore A | 77 | 79 | 78 |
| Rückprallelastizität bei RT | % | 46 | 45 | 44 |
| Zugfestigkeit bei RT | MPa | 21 | 17 | 21 |
| Reißdehnung bei RT | % | 452 | 364 | 465 |
| Spannungswert 50 % | MPa | 2,2 | 2,4 | 2,2 |
| Spannungswert 300 % | MPa | 14,2 | 15,2 | 14,2 |
| Bruchenergiedichte | J/cm³ | 40 | 27 | 42 |
| tan δₘₐₓ bei 55 °C | - | 0,121 | 0,135 | 0,135 |
| TFA-Energie bei 100 Kilozyklen | kPa | 82 | 90 | 96 |
| Trommellaufzeit bis Ausfall | h | 135 | 183 | 194 |

| | | | | |
|---|---|---|---|---|
| ^{a}high-cis Polybutadien ^{b}Ultrasil^{®} VN3, CTAB-Zahl = 165 m²/g, Evonik ^{c}Industries, Deutschland ^{c}Zeosil® 1115 MP, CTAB-Zahl = 105 m²/g, Rhodia, Deutschland ^{d}Zeosil® 1165 MP, CTAB-Zahl = 155 m²/g, Rhodia, Deutschland ^{e}Silankupplungsagens auf Ruß im Gewichtsverhältnis 1:1, X 50-S®, Evonik Industries, Deutschland | | | | |

Aus der Tabelle 1 wird ersichtlich, dass mit einer hoch dispergierbaren Kieselsäure mit einer CTAB-Zahl von 155 m²/g das Risswachstum im Vergleich zu einer Mischung mit einer herkömmlichen Kieselsäure reduziert werden kann, wobei die anderen Mischungseigenschaften auf ähnlichem Niveau verbleiben. Bei einem Reifen bewirkt die Verwendung einer solchen Mischung um Gürtelbereich eine deutliche Verlängerung der Lebensdauer.

## Patentansprüche

1. Schwefelvernetzbare Gummierungsmischung für Festigkeitsträger in Fahrzeugluftreifen, enthaltend
- 70 bis 100 phr (Gewichtsteile, bezogen auf 100 Gewichtsteile der gesamten Kautschuke in der Mischung) Naturkautschuk,
- bis zu 30 phr zumindest eines Polybutadiens,
- bis zu 15 phr zumindest eines Rußes,
- 20 bis 100 phr zumindest einer hoch dispergierbaren Kieselsäure,
- zumindest ein Silankupplungsagens und
- ein Haftsystem,
**dadurch gekennzeichnet, dass** die hoch dispergierbare Kieselsäure eine CTAB-Zahl gemäß ASTM D 3765 von mehr als 130 m²/g aufweist.

2. Gummierungsmischung nach Anspruch 1, **dadurch gekennzeichnet, dass** das zumindest eine Polybutadien ausgewählt ist aus einem Polybutadien mit einem cis-Gehalt von mehr als 95 Gew.-% oder einem funktionalisierten Li-Polybutadien.

3. Gummierungsmischung nach Anspruch 1 oder 2, **dadurch gekennzeichnet, dass** sie 40 bis 80 phr der Kieselsäure enthält.

4. Gummierungsmischung nach zumindest einem der Ansprüche 1 bis 3, **dadurch gekennzeichnet, dass** die Festigkeitsträger metallische Festigkeitsträger sind.

5. Gummierungsmischung nach Anspruch 4, **dadurch gekennzeichnet, dass** das Haftsystem ein Stahlcordhaftsystem auf der Basis von organischen Cobaltsalzen und Verstärkerharzen und mehr als 2,5 phr Schwefel ist.

6. Gummierungsmischung nach zumindest einem der Ansprüche 1 bis 5, **dadurch gekennzeichnet, dass** sie weniger als 15 phr Prozesshilfsmittel enthält.

7. Fahrzeugluftreifen, der eine mit Schwefel vernetzte Gummierungsmischung nach zumindest einem der Ansprüche 1 bis 6 aufweist.

8. Fahrzeugluftreifen nach Anspruch 7, **dadurch gekennzeichnet, dass** er eine Gürtelgummierung aus der Gummierungsmischung aufweist.

9. Fahrzeugluftreifen, insbesondere Nutzfahrzeugreifen, nach Anspruch 7 oder 8, **dadurch gekennzeichnet, dass** er eine Karkassgummierung aus der Gummierungsmischung aufweist.

## Claims

1. Sulfur-crosslinkable rubberizing mixture for reinforcement in pneumatic tires, comprising
- from 70 to 100 phr (parts by weight, based on 100 parts by weight of all of the rubbers in the mixture) of natural rubber,
- up to 30 phr of at least one polybutadiene,
- up to 15 phr of at least one carbon black,
- from 20 to 100 phr of at least one high-dispersibility silica,
- at least one silane coupling agent, and
- an adhesive system,
**characterized in that** the CTAB index of the high-dispersibility silica in accordance with ASTM D3765 is more than 130 m²/g.

2. Rubberizing mixture according to Claim 1, **characterized in that** the at least one polybutadiene is a polybutadiene having more than 95% by weight cis content or a functionalized Li-polybutadiene.

3. Rubberizing mixture according to Claim 1 or 2, **characterized in that** it comprises from 40 to 80 phr of the silica.

4. Rubberizing mixture according to at least one of Claims 1 to 3, **characterized in that** the reinforcement is metallic reinforcement.

5. Rubberizing mixture according to Claim 4, **characterized in that** the adhesive system is a steel cord adhesive system based on organic cobalt salts and on reinforcing resins, and more than 2.5 phr of sulfur.

6. Rubberizing mixture according to at least one of Claims 1 to 5, **characterized in that** it comprises less than 15 phr of processing aids.

7. Pneumatic tire which comprises a sulfur-crosslinked rubberizing mixture according to at least one of Claims 1 to 6.

8. Pneumatic tire according to Claim 7, **characterized in that** it comprises a belt-rubber mix made of the rubberizing mixture.

9. Pneumatic tire, in particular tire for a commercial vehicle, according to Claim 7 or 8, **characterized in that** it comprises a carcass-rubber mix made of the rubberizing mixture.

## Revendications

1. Mélange d'engommage réticulable au soufre pour supports de résistance dans des pneus automobiles, contenant :
- 70 à 100 pce (parties en poids, pour 100 parties en poids de l'ensemble des caoutchoucs dans le mélange) de caoutchouc naturel,
- jusqu'à 30 pce d'au moins un polybutadiène,
- jusqu'à 15 pce d'au moins un noir de carbone,
- 20 à 100 pce d'au moins une silice hautement dispersible,
- au moins un agent de couplage silane et
- un système adhésif,
**caractérisé en ce que** la silice hautement dispersible présente un indice CTAB selon ASTM D 3765 de plus de 130 m²/g.

2. Mélange d'engommage selon la revendication 1, **caractérisé en ce que** ledit au moins un polybutadiène est choisi parmi un polybutadiène ayant une teneur en cis de plus de 95 % en poids ou un Li-polybutadiène fonctionnalisé.

3. Mélange d'engommage selon la revendication 1 ou 2, **caractérisé en ce qu'**il contient 40 à 80 pce de la silice.

4. Mélange d'engommage selon au moins l'une quelconque des revendications 1 à 3, **caractérisé en ce que** les supports de résistance sont des supports de résistance métalliques.

5. Mélange d'engommage selon la revendication 4, **caractérisé en ce que** le système adhésif est un système adhésif pour câbles d'acier à base de sels de cobalt organiques et de résines renforçantes et plus de 2,5 pce de soufre.

6. Mélange d'engommage selon au moins l'une quelconque des revendications 1 à 5, **caractérisé en ce qu'**il contient moins de 15 pce d'adjuvants de procédé.

7. Pneu automobile, qui comprend un mélange d'engommage réticulé au soufre selon au moins l'une quelconque des revendications 1 à 6.

8. Pneu automobile selon la revendication 7, **caractérisé en ce qu'**il comprend un engommage de ceinture en le mélange d'engommage.

9. Pneu automobile, notamment pneu de véhicule utilitaire, selon la revendication 7 ou 8, **caractérisé en ce qu'**il comprend un engommage de carcasse en le mélange d'engommage.
